# EUROPÄISCHE PATENTSCHRIFT

(11) **EP 0 730 539 B1**
(45) Veröffentlichungstag und Bekanntmachung des Hinweises auf die Patenterteilung: **08.05.2002**
(21) Anmeldenummer: 95934109.0
(22) Anmeldetag: 23.09.1995
(51) Int. Cl.: B61C 5/00, B61C 7/04, B61C 9/08, B61D 13/00

(54) **SCHIENENGEBUNDENES TRIEBFAHRZEUG**
TRACK-BOUND POWER CAR
VEHICULE AUTOMOTEUR ROULANT SUR RAILS

(30) Priorität: 30.09.1994 DE 9415770 U
(43) Veröffentlichungstag der Anmeldung: 11.09.1996
(73) Patentinhaber: Bombardier Transportation GmbH, 13627 Berlin (DE)
(72) Erfinder: TEGELER, Ferdinand, D-13587 Berlin (DE)
(74) Vertreter: Akers, Noel James
(86) Internationale Anmeldenummer: EP9503778
(87) Internationale Veröffentlichungsnummer: WO9610508

(56) Entgegenhaltungen:
- EP-A- 0 058 914
- DE-A- 2 409 333
- GB-A- 421 698

## Beschreibung

Die Erfindung betrifft ein schienengebundenes Triebfahrzeug für die Personenbeförderung mit wenigstens einem Wagenteil, welcher Wagenteil von einem Wagenkasten mit wenigstens einem Fahrgastraum zur Aufnahme von Fahrgästen und mit einem Führerstand an wenigstens einer Stirnseite sowie mit aus Radsätzen gebildeten Laufwerken und mit wenigstens einem Antriebsmotor als Antriebseinheit gebildet ist.

Schienengebundene Triebfahrzeuge für die Personenbeförderung sind an sich seit langem allgemein bekannt, zum Beispiel als Triebwagen oder als elektrisch betriebener Triebwagen für den urbanen Schnellbahnverkehr, und werden üblicherweise im Personennahverkehr auf Strecken mit großem Fahrgastaufkommen eingesetzt.

Im wesentlichen aufgrund der durch den Antrieb, sei es ein dieselektrischer oder ein rein elektrischer Antrieb, auftretenden Beanspruchungen sind die bekannten Triebwagen entsprechend den gültigen Normen und Lieferbedingungen zur Aufnahme hoher Kräfte ausgelegt, was sich nachteilig auf die konstruktive Gestaltung und damit einhergehend auch auf das Gewicht auswirkt.

Ein weiteres Problem beim Einsatz von derartigen Massentransportfahrzeugen ist die Versorgung mit Energie für die Antriebseinheiten. Während die Elektrifizierung von Schienenstrecken weiter fortschreitet, so daß die Hauptstrecken weitestgehend mit elektrisch betriebenen Fahrzeugen befahrbar sind, gibt es immer noch eine Vielzahl von Nebenstrecken, welche nicht elektrifiziert sind und daher ein anderes Antriebskonzept erforderlich machen.

Hieraus resultiert ein weiteres Problem, nämlich daß auf bestimmten Streckenabschnitten, zum Beispiel in längeren Tunnelstrecken, ausschließlich nur emissionsfreie, das heißt elektrisch betriebene, Triebfahrzeuge zugelassen sind. Emissionsbehaftete Triebfahrzeuge, zum Beispiel Dieseltriebwagen, dürfen hier nicht einfahren, so daß die hiermit beförderten Personen dann in elektrisch betriebene Fahrzeuge umsteigen müssen.

Ferner ist es häufig zur Verbindung regionaler Ziele mit innerstädtischen Zielen wünschenswert, ein Fahrzeug zur Verfügung zu haben, das einerseits im Stadtbahn- oder Untergrundbahn-Netz eingesetzt werden kann und andererseits im Regionalbereich an einer Oberleitung oder netzunabhängig betrieben werden kann.

So ist beispielsweise aus der EP-A-0 058 914 ein schienengebundenes Triebfahrzeug für die Personenbeförderung mit einem von einem Wagenkasten gebildeten Wagenteil bekannt. Der Wagenteil ist mit einem Fahrgastraum zur Aufnahme von Fahrgästen und mit einem Führerstand an wenigstens einer Stirnseite versehen. Der Mittelteil des Wagenkastens ist gegenüber den Endteilen des Wagenkastens abgesenkt. Dabei ist ein Endteil als Triebwagenkopf ausgestaltet. Als Antriebseinheit ist ein rein elektrischer Antrieb vorgesehen.

Ausgehend von diesem Stand der Technik ist es Aufgabe der Erfindung, einen Triebwagen der eingangs genannten Art zu schaffen, der den Einsatz im Personennahverkehr erlaubt, d.h. auf beliebigen Bahnstrecken mit kurzen Haltestellenabständen, und hierbei den Fahrgästen eine unterbrechungsfreie Fahrt ermöglicht und je nach Bahnsteighöhe einen möglichst einstufigen bis stufenlosen Einstieg bietet, wobei die erforderliche Antriebsleistung je nach Bedarf anpaßbar und die Antriebsart je nach Bedarf wählbar und kombinierbar sein soll, and wobei der Platzbedarf für die Antriebseinheit geringer ist.

Diese Aufgabe wird gelöst durch ein Triebfahrzeug mit den Merkmalen des Anspruchs 1.

Demgemäß ist mit der Erfindung einerseits die Möglichkeit gegeben, den Abstand zwischen dem Bodenniveau des Fahrgastraumes und dem des jeweiligen Bahnsteiges gegenüber den bekannten Triebwagen deutlich zu verringern und andererseits, ein Grundmodell für unterschiedliche Antriebsarten verwenden zu können oder beliebige Streckenabschnitte mit einem kombinierten Antrieb zu befahren, ohne daß eine Fahrtunterbrechung wegen der Unzulässigkeit der installierten Antriebskomponente erforderlich ist.

Dabei kann vorgesehen sein, daß wenigstens ein Endteil des Schienentriebfahrzeuges als Triebwagenkopf ausgebildet ist mit einem dort befindlichen Führerstand, von welchem aus der Triebwagen gesteuert werden kann. Als Antriebseinheit ist wiederum wahlweise ein dieselmechanischer Antrieb oder ein dieselelektrischer Antrieb oder ein rein elektrischer Antrieb oder ein aus einem dieselelektrischen und einem rein elektrischen Antrieb kombinierter Mehrsystemantrieb oder ein aus zwei verschiedenen elektrischen Antriebsvarianten kombinierter Mehrsystemantrieb oder ein aus einem dieselelektrischen und zwei verschiedenen elektrischen Antriebsvarianten kombinierter Mehrsystemantrieb vorgesehen, der vorteilhafterweise unterhalb eines Endteils, vorzugsweise unter dem Triebwagenkopf, angeordnet ist und wenigstens eine Achse eines Fahrwerks beaufschlagt.

Das erfindungsgemäße Triebfahrzeug kann ein- oder mehrteilig, zum Beispiel 3-teilig oder 4-teilig, ausgebildet sein, wobei die jeweils außen liegenden Enden jeden Wagenkastens dann als Triebwagenkopf ausgebildet sind und einen Führerstand aufnehmen, während die innen befindlichen Wagen keinen Führerstand aufweisen, so daß das derart gestaltete Triebfahrzeug im Wendezugbetrieb einsetzbar ist.

Die Fahrwerke des erfindungsgemäßen Triebfahrzeuges können als Einachs- oder Doppelachslaufwerke ausgebildet sein, wobei letztere in Drehgestellen angeordnet sind.

Gemäß einer bevorzugten Ausführungsvariante ist die, wie bereits erwähnt, vorzugsweise unter dem Triebwagenkopf angeordnete Antriebseinheit als dieselmechanischer Antrieb ausgebildet mit einem flüssigkeitsgekühlten Dieselmotor, der über ein, beispielsweise parallel neben ihm angeordnetes, vorzugsweise automatisches Mehrganggetriebe die Antriebsachsen beaufschlagt. Zusätzlich können Anfahrwandler sowie auch Retarder in den Kraftfluß zwischen Antriebseinheit und Antriebsachsen eingebunden sein.

Entsprechend einer weiteren vorteilhaften Ausführungsform der Erfindung ist an Stelle eines dieselmechanischen Antriebs wenigstens ein, aus einem Dieselgenerator oder aus einem Netz über Stromleitungen oder Stromschienen gespeister elektrischer Fahrmotor vorgesehen, der alternativ je angetriebene Achse beziehungsweise je Fahrwerk (= Drehgestell) vorgesehen sein kann oder aber als sogenannter Radnabenmotor ausgebildet sein kann.

Weiterhin ist, wie bereits ausgeführt, auch die Kombination aus dieselelektrischem und rein elektrischem Antrieb in einem Fahrzeug möglich, so daß praktisch der Wechsel der Versorgung der in diesem Falle ausschließlich von Elektromotoren gebildeten Fahrmotoren durch Umschalten von einer Energiequelle -Netzbetrieb- auf die andere Energiequelle -Inselnetz-Betrieb aus dem dieselangetriebenen Generator- erfolgen kann.

Desweiteren besteht, wie schon erwähnt, die Möglichkeit der Kombination der beiden rein elektrischen Antriebsarten (Gleichspannungsantrieb und Wechselspannungsantrieb) in einem Fahrzeug, so daß praktisch der Wechsel der Versorgung der in diesem Falle ausschließlich von Elektromotoren gebildeten Fahrmotoren durch Umschalten von einer Energiequelle -Netzbetrieb am Wechselspannungsnetz- auf die andere Energiequelle - Netzbetrieb am Gleichspannungsnetz- erfolgen kann.

Schließlich ist, wie ebenfalls schon angesprochen, die Kombination aus dieselelektrischem und den beiden rein elektrischen Antriebsarten (Gleichspannungsantrieb und Wechselspannungsantrieb) in einem Fahrzeug möglich, so daß praktisch der Wechsel der Versorgung der in diesem Falle ausschließlich von Elektromotoren gebildeten Fahrmotoren durch Umschalten von einer Energiequelle -erste Netzbetriebsart- auf eine andere Energiequelle -zweite Netzbetriebsart oder Inselnetz-Betrieb aus dem dieselangetriebenen Generator- erfolgen kann.

Bei der bevorzugten dieselmechanischen Ausführungsform der Erfindung ist vorgesehen, daß jeweils nur die unterhalb der Triebwagenköpfe angeordneten Achsen angetrieben werden, während die dazwischen liegenden Achsen nicht angetrieben sind.

Bei allen anderen Ausführungsformen außer der dieselmechanischen Ausführung kann vorgesehen werden, daß auch einige der dazwischenliegenden Achsen oder sogar nur diese angetrieben werden.

Die Anordnung der Antriebseinheiten unter den gegenüber dem Mittelteil höher liegenden Triebwagenköpfen erlaubt eine modulartige Ausgestaltung der Antriebseinheit, welche so die Möglichkeit bietet, entsprechend dem jeweiligen Leistungsbedarf angepaßte Motoren sowie auch hierauf abgestimmte Getriebe zum Einbau vorzusehen, ohne daß hieraus Platzprobleme resultieren beziehungsweise bauliche Veränderungen des Wagenkastens erforderlich sind.

Die Ausgestaltung des kombinierten dieselelektrischen-elektrischen Antriebs erfordert selbstverständlich einige Komponenten, welche für den reinen Betrieb mit nur einer Energiequelle entfallen könnten und deren Aufgaben, Aufbau und Zusammenwirken nachstehend näher erläutert werden.

Das erfindungsgemäße Triebfahrzeug kann als reines Einsystemfahrzeug oder als Mehrsystemfahrzeug ausgebildet sein. Das erfindungsgemäße Mehrsystem-Triebfahrzeug ist ein Fahrzeug für eine oder mehrere alternative Energieversorgungsarten. Als Betriebsvarianten können ein elektrischer Betrieb am Wechselspannungsoberleitungsnetz, ein elektrischer Betrieb am Gleichspannungsnetz und ein dieselelektrischer

Betrieb kombiniert werden. Als Einsystemfahrzeug ist es für eine einzelne dieser Betriebsvarianten vorgesehen, so daß in einem Einsystemfahrzeug ein rein dieselmechanischer Antrieb möglich ist.

Falls das Fahrzeug mit einem dieselelektrischen Antrieb versehen ist, kann es, unabhängig vom Oberleitungsnetz, auf nicht elektrifizierten Nebenstrecken eingesetzt werden. Mit einem Antriebszweig zum Betrieb am Wechselspannungsnetz kann das erfindungsgemäße Fahrzeug an der Oberleitung betrieben werden. Zusätzlich oder alternativ kann das erfindungsgemäße Fahrzeug mit einem Antriebszweig zum Betrieb am Gleichspannungsnetz ausgerüstet sein, so daß ein Betrieb auf Stadtbahn- und U-Bahnstrecken mit Gleichspannungsversorgung, beispielsweise über ein Stromschiene oder über Oberleitung möglich ist.

Die verschiedenen Antriebsvarianten können kombiniert werden und erlauben damit den Bau eines Mehrsystemfahrzeugs zum Betrieb auf verschieden ausgebauten Strecken.

Femer kann ein Fahrzeug mehrere Antriebssysteme enthalten, die jeweils als Ein- bzw. Mehrsystemantrieb ausgeführt sind. Im Normalfall sind alle Antriebssysteme identisch, je nach Erfordernissen können aber auch unterschiedliche Antriebssysteme zum Einsatz kommen. Das erfindungsgemäße Mehrsystemfahrzeug kann ein einteilig oder mehrteilig ausgebildet und mit einer oder mit mehreren Antriebsgruppen versehen sein. Jede Antriebsgruppe kann, je nach Auslegung, mit einem oder mehreren Fahrmotoren versehen sein.

Die folgende Beschreibung bezieht sich immer nur auf ein einzelnes Antriebsystem. Dabei können bei mehreren Antriebssystemen im Fahrzeug die beschriebenen Teile entsprechend mehrfach im Fahrzeug vorhanden sein.

Jedes Antriebsystem läßt sich in vier Teile gliedern, nämlich in die Einspeisung, bestehend aus einem oder mehreren Einspeisezweigen, in den Zwischenkreis, die Hilfsbetriebe-Versorgung, bestehend aus einem oder mehreren Hilfsbetriebe-Umrichtem zur Speisung der jeweiligen Hilfsbetriebe und Erzeugung der erforderlichen Steuerspannungen, und in die Fahrmotorspeisung, bestehend aus einem oder mehreren Stromrichtern zur Ansteuerung der elektrischen Fahrmotoren. Im folgenden werden die Hilfsbetriebe-Versorgung und die Fahrmotorspeisung gemeinsam als Last bezeichnet.

Die Einspeisung besteht aus einem oder mehreren, parallel am Zwischenkreis angeschlossenen Einspeisezweigen, die wechselweise zur Speisung des Zwischenkreises herangezogen werden können, und damit den Betrieb auf unterschiedlichen Strecken ermöglichen. Je nach Anforderung an das Fahrzeug können entsprechenden Zweige vorgesehen werden. Die möglichen Einspeisezweige sind Wechselspannungszweige, Gleichspannungszweige mit und ohne Anpaßschaltung und Generatorzweige. Sie sind in den folgenden Abschnitten beschrieben.

Der Wechselspannungszweig dient zur Speisung des Zwischenkreises aus der Wechselstromoberleitung (z.B. 15kV mit f= 16 2/3 Hz). Er umfaßt als wesentliche Teile einen oder mehrere Stromabnehmer, einen Transformator, der die Oberleitungsspannung heruntertransformiert, und einen Stromrichter oder Gleichrichter zur Erzeugung der Zwischenkreis-Gleichspannung. Femer sind gegebenenfalls eine Ladeschaltung zum kontrollierten Aufladen des Zwischenkreises sowie Filterschaltungen vorgesehen.

Der Gleichspannungszweig mit Anpaßschaltung dient zur Speisung des Zwischenkreises aus einer Stromschiene oder einer Gleichspannungsoberleitung. Er umfaßt als wesentliche Teile einen oder mehrere Stromabnehmer und eine Anpaßschaltung (zum Beispiel wahlweise mit Tiefsetzsteller, Hochsetzsteller, Zweiquadrantensteller oder andere) zur Anpassung der Stromschienenspannung an die Zwischenkreisspannung. Ferner sind gegebenenfalls eine Ladeschaltung und Filterschaltungen enthalten. Die Anpaßschaltung ermöglicht unter anderem eine Auslegung zum Betrieb an Netzen mit sehr hoher Gleichspannung.

Der Gleichspannungszweig ohne Anpaßschaltung dient ebenfalls zur Speisung des Zwischenkreises aus einer Stromschiene oder einer Gleichspannungsoberleitung mit einer mittleren Gleichspannung von zum Beispiel 750 V. Dieser Kreis enthält allerdings keine Anpaßschaltung, so daß Zwischenkreisspannung und Stromschienenspannung unmittelbar miteinander gekoppelt sind. Als wesentliches Element enthält er Stromabnehmer und einen Schalter zum Abtrennen des Zwischenkreises von der Stromschiene. Femer sind gegebenenfalls eine Ladeschaltung und Filterschaltungen enthalten.

Der Generatorzweig dient zur Speisung des Zwischenkreises unabhängig von elektrischen Netzen aus einem, von einem Verbrennungsmotor (z.B. Dieselmotor) angetriebenen Generator. Als wesentliche Teile sind vorgesehen ein Verbrennungsmotor, ein Generator und ein Gleichrichter zur Zwischenkreisspeisung.

In vielen Fällen besteht aber auch die Möglichkeit, unter Doppel- oder Mehrfachausnutzung von Bauteilen, Einspeisezweige zu kombinieren. Diese Zweige lassen sich dann nicht mehr so klar trennen, so daß Kombinationszweige, wie etwa ein kombinierter Gleichspannungs- und Wechselspannungszweig entstehen. In der Praxis besteht eine "unendliche" Vielfalt an Kombinationsmöglichkeiten mit jeweils unterschiedlichen Vor- und Nachteilen, so daß es kaum möglich ist, auf alle Möglichkeiten einzugehen.

Der Zwischenkreis hat die Aufgabe, die von den Gleichrichtern, Gleichspannungsstellern oder Vierquadrantenstellern in den verschiedenen Einspeisezweigen gelieferten Ströme zu glätten und eine konstante Zwischenkreisspannung zur Verfügung zu stellen. Er besteht im Wesentlichen aus einem oder mehreren Zwischenkreiskondensatoren. In bestimmten Fällen ist zusätzlich ein Bremssteller, bestehend aus Bremswiderstand und einem Schaltelement (Transistor, IGBT, GTO o.ä.), erforderlich.

Die Hilfsbetriebe-Versorgung dient der Bereitstellung von Spannungen zur Speisung der Hilfsbetriebe und Versorgung der elektronischen Ausrüstung. Sie besteht aus einem oder mehreren Umrichtern, die aus dem Zwischenkreis gespeist werden und die entsprechenden Spannungen generieren. Hilfsbetriebe sind z.B. Kühlerventilatoren, Beleuchtung, elektrische Heizung, Klimaanlagen etc., zur elektronischen Ausrüstung gehört z.B. die Leittechnik.

Die Fahrmotorspeisung dient zur Erzeugung des für die Fahrmotoren erforderlichen Spannungssystems aus der Zwischenkreisspannung. Sie besteht im Wesentlichen aus einem oder mehreren Stromrichtern, die jeweils einen oder mehrere Fahrmotoren speisen. Als Fahrmotoren können Drehstrom- oder Gleichstrommaschinen eingesetzt werden. Entsprechend werden als Stromrichter dreiphasige Wechselrichter zur Erzeugung eines Drehstromsystems, bzw. Gleichspannungssteller zur Einstellung der erforderlichen Gleichspannungen eingesetzt.

Diese und weitere vorteilhafte Ausgestaltungen und Verbesserungen der Erfindung sind Gegenstand der Unteransprüche.

Anhand eines in der Zeichnung dargestellten Ausführungsbeispieles sollen die Erfindung, vorteilhafte Ausgestaltungen sowie besondere Vorteile der Erfindung näher erläutert und beschrieben werden.

Es zeigen
- Fig. 1: einen einteiligen Triebwagen gemäß der Erfindung in Seitenansicht,
- Fig. 2: einen Wagenkasten des Triebfahrzeuges gemäß Fig. 1 in Seitenansicht;
- Fig. 3: eine Unteransicht eines Triebwagenkopfes;
- Fig. 4: Übersicht über den prinzipiellen Aufbau eines Ein- oder Mehrsystemantriebs
- Fig. 5: ein Schaltschema für eine Wechselspannungsversorgung für einen Triebwagen gemäß Fig. 1;
- Fig. 6: in Schaltschema für eine Gleichspannungsversorgung mit Anpaßschaltung mit einem Tiefsetzsteller für einen Triebwagen gemäß Fig. 1;
- Fig. 7: ein Schaltschema für eine Gleichspannungsversorgung mit Anpaßschaltung mit einem Hochsetzsteller für einen Triebwagen gemäß Fig. 1;
- Fig. 8: ein Schaltschema für eine Gleichspannungsversorgung ohne Anpaßschaltung für einen Triebwagen gemäß Fig. 1;
- Fig. 9: eine Schaltungsanordnung für einen von einem Verbrennungsmotor beaufschlagten Generator;
- Fig. 10: einen Zwischenkreis mit Bremssteller;
- Fig. 11: ein Beispiel für eine Hilfsbetriebeversorgung
- Fig. 12: ein Beispiel eines Zweiges zur Fahrmotorspeisung mit zwei Fahrmotoren;
- Fig. 13: eine beispielhafte Schaltungsanordnung für eine Antriebseinheit für ein Duofahrzeug für elektrischem Wechselspannungsbetrieb und dieselelektrischen Betrieb und
- Fig. 14: eine schematische Seitenansicht eines vierteiligen Triebfahrzeuges entsprechend Fig. 10

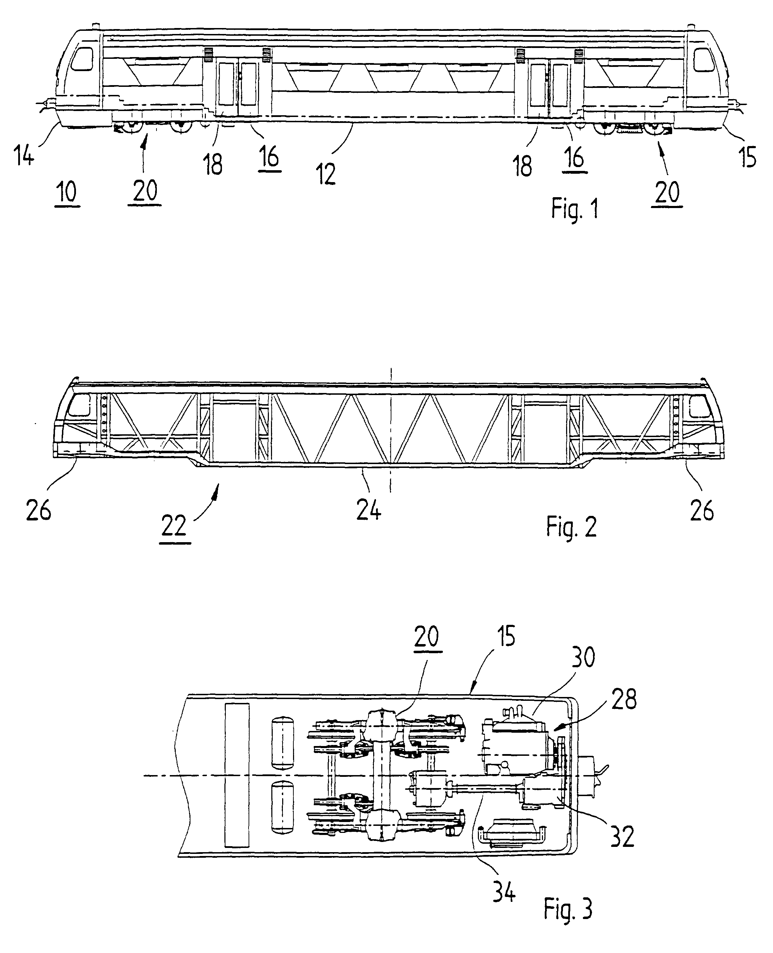

In Fig. 1 ist ein Triebwagen 10 mit einem Mittelteil 12 und an den Enden daran anschließenden Triebwagenköpfen 14, 15 in Seitenansicht dargestellt. Der Mittelteil 12 weist an seinen Enden jeweils Einstiegsbereiche 16 mit Türen 18 auf, an welche die Triebwagenköpfe 14, 15 jeweils anschließen.

Der Triebwagen 10 besitzt zwei Fahrwerke 20, die als sogenannte Triebdrehgestelle ausgebildet sind und in der Darstellung in Fig. 3 in vergrößerter Unteransicht wiedergegeben sind. Die Fahrwerke 20 sind unterhalb der Triebwagenköpfe 14, 15 angeordnet, deren Niveau gegenüber dem Mittelteil 12 erhöht ist, so daß die zu den Laufwerken 20 gehörigen Radsätze sowie die Antriebseinheit Platz finden. Demgegenüber ist der Mittelteil 12, wie insbesondere aus der Ansicht in Fig. 2 ersichtlich ist, in Niederflurbauweise abgesetzt, so daß die Einstiegsbereiche 16 möglichst bodennah gestaltet sind und ein leichtes und rasches Ein- und Aussteigen der Fahrgäste möglich ist.

Im Sinne einer ansprechenden Ausgestaltung sind die Triebwagenköpfe 14, 15 im Bereich der Fahrwerke mit einer Verkleidung versehen, welche die Fahrwerke und die Antriebseinheiten verdeckt, was den Eindruck eines tiefliegenden Fahrzeuges vermittelt.

In Fig. 2 ist ein Wagenkasten 22 für den in Fig. 1 dargestellten Triebwagen 10 gezeigt, welcher einen langgestreckten mittleren Bereich 24 entsprechend dem Mittelteil 12 gemäß Fig. 1 aufweist, an welche beidendig gegenüber dem Bodenniveau des mittleren Bereichs 24 erhöhte Kopfstücke 26 anschließen. Die Kopfstücke 26 entsprechen den Triebwagenköpfen 14, 15 und sind zur Aufnahme von jeweils einem Führerstand vorgesehen.

Der Grund für die stufige Absetzung der Kopfstücke 26 liegt dann, daß hier jeweils die in Fig. 3 in Unteransicht dargestellte Antriebseinheit 28 mit den Drehgestellen 20 unterzubringen ist, und insbesondere wegen der erforderlichen Raddurchmesser ein Mindestabstand erforderlich ist.

Die Darstellung in Fig. 3 zeigt einen Triebwagenkopf 15 eines Einsystemtriebwagens 10 von seiner Unterseite, wobei, wie auch aus Fig. 1 ersichtlich ist nahe den Einstiegsbereichen 16 jeweils das Fahrwerk 20 angeordnet ist, während die dem Fahrwerk 20 zugeordnete Antriebseinheit in dem zwischen Fahrwerk und Wagenende verbleibenden Bereich angeordnet ist. Die hier gezeigte Antriebseinheit 28 besteht aus einem wassergekühlten Dieselmotor 30, der über ein Getriebe 32, das vorzugsweise als automatisches Mehrganggetriebe ausgebildet ist, und eine Gelenkwelle 34 mit dem Fahrwerk 20 in Verbindung steht.

Je nach Erfordernis kann hierbei eine Achse des Triebdrehgestells 20 beaufschlagt sein oder es können beide Achsen angetrieben werden.

Der Wagenkasten stützt sich vorzugsweise mittels Luftfedern auf den Drehgestellen ab, wobei diese in Reihe geschaltet sind mit verschleißfreien Gummi-Federelementen. Hierbei dienen die Gummi-Federelemente als Notfeder, falls die Luftfedern schadhaft sind.

Nachfolgend werden einige Erläuterungen zu den beim erfindungsgemäßen Schienentriebfahrzeug zum Einsatz vorgesehenen Baugruppen des Abtriebsstranges, insbesondere des Getriebes mit hydraulischem Drehmomentwandler gegeben. Zum Zwecke einer einerseits möglichst komfortablen und andererseits möglichst ökonomischen und damit umweltschonenden Betriebsweise ist eine kombinierte mechanische und hydraulische Übertragung der Antriebsleistung vorgesehen. Die hierzu vorgesehenen Komponenten benutzen das Prinzip der Leistungsteilung, das mit einem sogenannten Differentialwandler erreicht wird. Dieser verbindet die Vorzüge zweier unterschiedlicher Systeme der Leistungsübertragung, nämlich der hydrodynamischen und der mechanischen. Während die Vorzüge der Hydrodynamik in weichem, und damit weitgehend verschleißfreiem Anfahren mit hoher Zugkraft, in einer zügigen Anfahrtbeschleunigung ohne Schalten sowie in praktisch verschleißfreiem Bremsen zu sehen sind, bietet der mechanische Antrieb den Vorteil einer verlustarmen Leistungsübertragung bei gleichzeitig hohem Wirkungsgrad. Gemäß der Erfindung ist vorgesehen, diese an sich bekannten Vorteile für das neugeschaffene Schienentriebfahrzeug zu nutzen und zwar immer dann, wenn sie am wirkungsvollsten und wirtschaftlichsten sind.

Die Hydrodynamik übernimmt das Anfahren. Das neue Schienentriebfahrzeug fährt weich an, mit hoher Anzugskraft, beschleunigt zügig, ohne Schalten. Die Hydrodynamik übernimmt das Bremsen (rund 80% aller Bremsungen), aus jeder Geschwindigkeit bis nahezu 0 km/h. Das Schienentriebfahrzeug wird weich, aber sehr wirkungsvoll gebremst, ohne Bremsverschleiß und ohne Gefahr des sogenannten Fading, das heißt ohne Nachlassen der Bremswirkung.

Die Mechanik hat schon während des Anfahrens zunehmend Anteil an der Leistungsübertragung. Sobald der Differentialwandler seinen besten Wirkungsgrad überschreitet, wird seine Aufgabe ganz von der Mechanik übernommen.

Der hydraulische Drehmomentwandler wirkt als hydrodynamischer Retarder und ist der mechanischen Betriebsbremse vorgeschaltet. Er ist gangunabhängig über den gesamten Fahrbereich wirksam. Die kinetische Energie des Fahrzeugs wird im Wandler in Wärme umgesetzt und über den Wärmetauscher abgeführt.

Das Ergebnis sind weniger Verschleiß und längere Haltbarkeit der Bremsbeläge, weniger Bremsgeräusche und kein Lärm von Auspuffklappenbremsen.

Der erfindungsgemäß zum Einsatz bei dem neuen Schienentriebfahrzeug vor gesehene Differentialwandler ist ein Drehmomentwandler mit vorgeschaltetem, als Differential wirkendes Planetengetriebe, das zur Leistungsteilung in eine hydraulisch wirksame und in eine rein mechanische Komponente aufgeteilt ist. Dabei ist nur im Anfahrpunkt im 1. Gang eine rein hydrodynamische Leistungsübertragung vorgesehen. Mit zunehmender Fahrgeschwindigkeit wird ein steigender Anteil mechanisch übertragen (äußere Leistungsteilung). Anteile 50/50 bei Schaltung in den 2. Gang. Alle weiteren Gänge sind rein mechanisch.

Der Aufbau des beim neuen Schienentriebfahrzeug eingesetzten Differentialwandler-Getriebe-Blocks ist an sich bekannt. Ein solches Getriebe wird als Fertigteil zugeliefert und in das Schienentriebfahrzeug integriert. Es handelt sich hierbei um ein vollautomatisches hydrodynamisch-mechanisches Getriebe, dessen Drehmomentwandler zum Beschleunigen und Verzögern (Bremsen) genutzt wird.
Der hydrodynamische Wandler ist als Gegenlaufwandler ausgeführt. Davor liegen die Wandlerpumpenbremse, die Durchkupplung, das Differentialgetriebe zur Leistungsverzweigung und die Eingangskupplung. Hinter dem Wandler führt ein Planetengetriebe die hydrodynamischen und mechanischen Kräfte zusammen.

Mit dem dritten Planetengetriebe wird der Rückwärtsgang geschaltet und beim Bremsen die Energie in den Wandler geleitet. Eine Federkupplung am Getriebeeingang dämpft die Schwingungen des Motors. Geschaltet wird das Getriebe hydraulisch; die Schaltbefehle kommen von der elektronischen Steuerung. Der Wärmetauscher ist eingebunden in den Kühlkreislauf des Antriebsmotors.

Der Motor ist über einen Torsionsdämpfer mit der Antriebswelle und einem umlaufenden Lamellen- und Kolbenträger verbunden. Bei geöffneter Eingangskupplung wird nur eine Zahnradpumpe angetrieben, die den Wandler, die Steuerung und die Schmierung mit dem nötigen Drucköl versorgt.

Bei geschlossener Eingangskupplung wird die Motorleistung auf den Außenkranz des Differentials übertragen. Beim Anfahren stehen die Antriebswelle und der mit ihr verbundene Planetenträger still. Hierbei werden das Sonnenrad und das Pumpenrad über die Planetenräder in entgegengesetzter Drehrichtung angetrieben. Im Wandler strömt das vom Pumpenrad beschleunigte Öl im geschlossenen Kreislauf durch das Leitrad und durch das Turbinenrad. Das von dem Turbinenrad abgegebene gewandelte, das heißt erhöhte, Drehmoment wird über die Planetenräder und den Planetenträger des Turbinengetriebes, dessen Lamellenbremse geschlossen ist, auf die Abtriebswelle übertragen.

Die Umschaltung in den 2. Gang mit rein mechanischer Leistungsübertragung erfolgt automatisch in Abhängigkeit von der Fahrgeschwindigkeit und der Motorfüllung. Die Lamellenbremse wird geschlossen, das Pumpenrad somit stillgesetzt und die hydrodynamische Leistungsübertragung damit ausgeschaltet. Gleichzeitig wird das Turbinenrad über die sich öffnende Lamellenbremse des Turbinengetriebes abgeschaltet. Die Übersetzung des 2. Ganges entspricht der des Differentials.

Bei etwa 70% der Höchstgeschwindigkeit öffnet automatisch die Eingangskuppplung, während die sogenannte Durchkupplung schließt. Damit ist die Antriebswelle direkt mit der Abtriebswelle verbunden, und die Übersetzung 1:1 ist hergestellt.

Gemäß einer alternativen Ausführung kann bereits bei etwa 50 % der Höchstgeschwindigkeit automatisch die Eingangskupplung öffnen, während die Durchkupplung schließt, so daß damit die Antriebswelle direkt mit der Abtriebswelle verbunden ist und ebenfalls die Übersetzung 1:1 resultiert.

Bei der letzterwähnten Alternative erfolgt bei ca. 70 % der Höchstgeschwindigkeit die automatische Umschaltung vom 3. in den 4. Gang. Dabei schließt die Kupplung, während die Durchkupplung öffnet. Dieser Gang ermöglicht unter Berücksichtigung der jeweils spezifischen Auslegungsgeschwindigkeit die Verwendung der gleichen Achsübersetzung unabhängig vom Einsatzzweck.

Im Falle, daß weitere Gänge (Schaltstufen) vorgesehen sind, zum Beispiel 6 Gänge, um ein verbessertes Beschleunigungsverhalten beim Anfahren zu erzielen, ist eine entsprechende weitere Differenzierung der Schaltpunkte erforderlich.

Bei Bremsbetrieb wird das Turbinenrad über das Planetengetriebe durch das schiebende Fahrzeug angetrieben. Dabei ist die Lamellenbremse des Planetengetriebes geschlossen. Das Turbinenrad wird entgegen seiner Drehrichtung bei Fahrt im 1. Gang angetrieben und wirkt als Axialpumpe, die das Öl gegen das festgebremste Pumpenrad und das Leitrad fördert. Die hierbei in Wärme umgesetzte kinetische Energie wird über den Wärmetauscher abgeführt.

Eine Trennung des Kraftflusses zwischen Motor und Getriebe kann unter bestimmten Bedingungen durch Öffnen der Getriebeeingangskupplung erfolgen. Dieser Vorgang wird automatisch eingeleitet und kann abhängig von der Anzahl der Haltestellen und Verkehrsbedingungen zu einer Einsparung an benötigter Energie führen.

Der zuvor beschriebene Wandlerblock wird zu einem Antriebsblock vervollständigt in Kombination mit allen branchenüblichen, Wasser- oder luftgekühlten, füllungs- oder drehzahlgeregelten Dieselmotoren zum Einsatz. Durch unterschiedliche Übersetzungen des Differentialgetriebes und verschiedene Pumpenräder, die in der Leistungsaufnahme variieren, können Motor und Getriebe optimal aufeinander abgestimmt werden, so daß für jeden Einsatz ein hinsichtlich seiner Antriebskomponenten bestmöglich abgestimmtes Fahrzeug herstellbar ist.

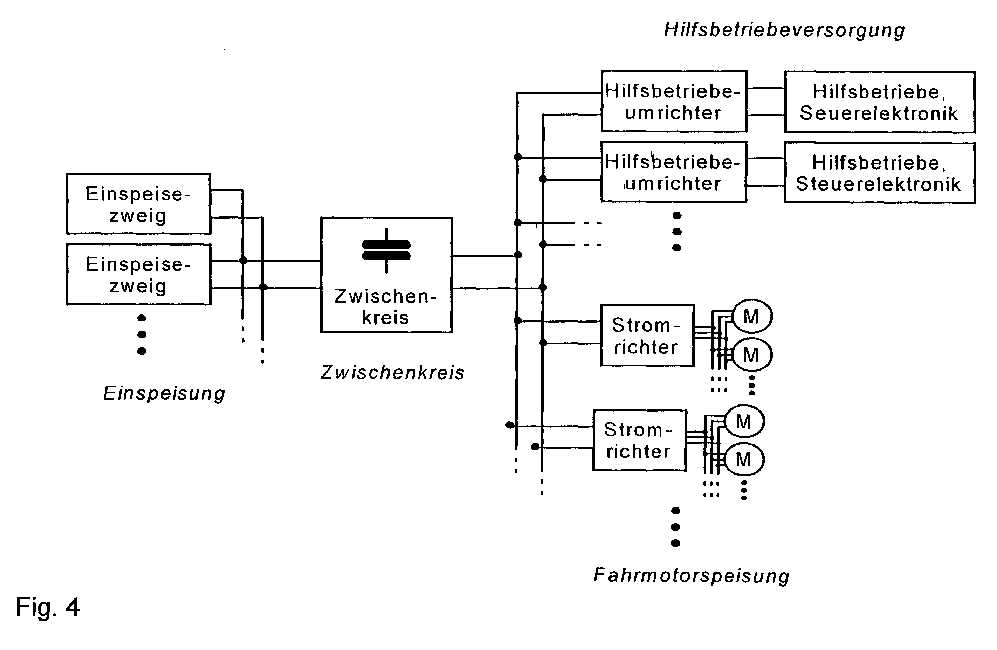

Im folgenden soll die für den elektrischen Wechselspannungs-, für den Gleichspannungs-, den Dieselelektro- sowie für den Mehrsystembetrieb vorgesehene Ausrüstung, insbesondere mit Blick auf die elektrischen Komponenten anhand der in Fig. 4 gezeigten Schaltungsanordnung näher erläutert werden. Dabei ist darauf hinzuweisen, daß die einzelnen verwendeten elektrischen Komponenten einerseits und die vorgesehenen Schaltungsanordnungen prinzipiell bekannt sind, allerdings nicht in Verbindung mit dem erfindungsgemäßen Triebwagen.

Der Wechselspannungszweig dient, wie bereits erwähnt, zur Bereitstellung der Zwischenkreisenergie aus dem Wechselstrom-Oberleitungsnetz (z.B. 15kV, 16/3 Hz). Er besteht unter Bezugnahme auf Fig. 4 aus einem Stromabnehmer (SA), einem Leistungsschalter (LS), einer Filterschaltung (L_{f}, C_{f}), einem Transformator (TR), einer Ladeschaltung (R_{L,} LD), einem Hauptschütz (HS) und einen Vierquadrantensteller (4QS).

Bei der Zuordnung von Stromabnehmern (SA) und Antriebseinheiten bestehen mehrere alternative Möglichkeiten, So kann jede Antriebseinheit von einem eigenen Pantographen gespeist werden, es kann ein Pantograph pro Fahrzeug zur Speisung aller Antriebseinheiten herangezogen werden, oder es können mehrere, miteinander verbundene und wechselweise betriebene Pantographen zur gemeinsamen Speisung aller Antriebseinheiten im Fahrzeug eingesetzt werden. Dargestellt ist in Fig. 4 die Ausführung mit einem Pantographen pro Antriebseinheit.

Der Leistungschalter (LS) dient zum kompletten Abtrennen des Wechselspannungszweiges vom Netz.

Zur Unterdrückung von Oberwellen ist es vorteilhaft, eine Filterschaltung vorzusehen, die aus einer Filterinduktivität (L_{f}) und einem Filterkondensator (C_{f}) besteht, die vor dem Transformator (TR) direkt am Netz betrieben werden.

Der Transformator (TR) setzt die hohe Oberleitungsspannung auf niedrigere Werte um, wobei das Übersetzungsverhältnis dabei so gewählt wird, das die Transformatorspannung unter der minimal zulässigen Zwischenkreisspannung bei Belastung liegt, so daß der nachfolgende Vierquadrantensteller immer als Hochsetzsteller betrieben werden kann. Um dem Vierquadrantensteller eine definierte Eingangsinduktivität zur Verfügung zu stellen, kann der Transformator (TR) mit erhöhter Streuinduktivität ausgeführt werden. Ein solcher Transformator (TR) hat neben der transformatorischen Funktion die Funktion einer Längsinduktivität zum Netz. Alternativ kann auch eine hier nicht eingezeichnete diskrete Langsinduktivität in Reihe mit dem Transformator und den Vierquadrantensteller eingesetzt werden.

Der Vierquadrantensteller (4QS) arbeitet als Hochsetzsteller. Er setzt gemeinsam mit dem Zwischenkreiskondensator und der diskreten oder als Streuinduktivität ausgebildeten Längsinduktivität die an seinem Eingang anstehende Wechselspannung in eine höhere Gleichspannung um. Dabei läßt er sich so steuern, daß er dem Netz nur sinusförmige, blindleistungsfreie Ströme entnimmt. Außerdem erlaubt er eine Rückspeisung der Bremsenergie beim Bremsen ins Netz.

Die Ladeschaltung dient zum Aufladen des Zwischenkreises aus dem Netz. Sie ist bei den meisten verwendbaren 4QS erforderlich, um bei entladenem Zwischenkreis ein kontrolliertes Aufladen zu ermöglichen. Die Ladeschaltung besteht aus Ladeschütz (LD) und Ladewiderstand (R_{L}). Das Hauptschütz (HS) dient zum Überbrücken der Ladeschaltung. Während des Betriebs ist das Hauptschütz (HS) geschlossen und die Ladeschaltung bleibt wirkungslos.

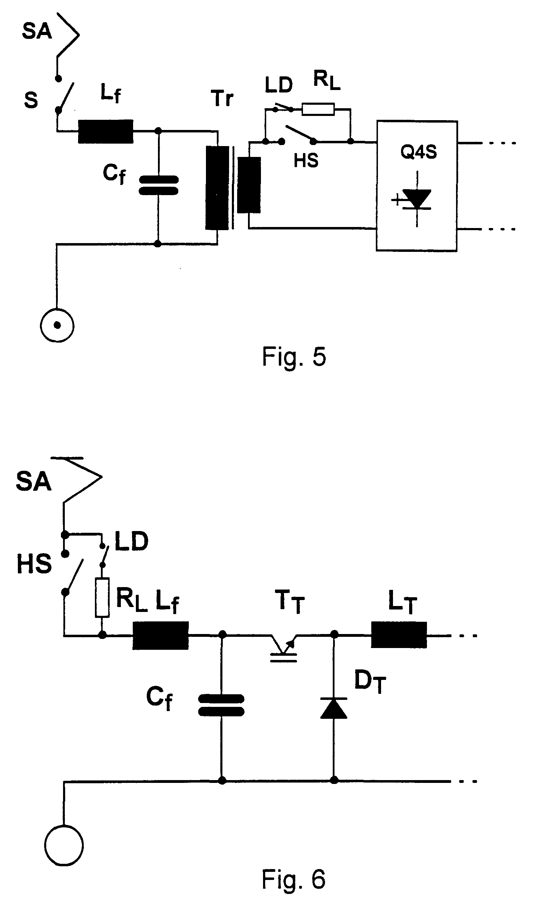

Der Gleichspannungszweig dient zur Speisung des Zwischenkreises aus einem Gleichspannungsnetz (z.B. 750V=). Er besteht aus Stromabnehmer (SA), einem Gleichstromsteller zur Anpassung der Schienenspannung an die Zwischenkreisspannung (T_{T}, D_{T}, L_{T} bzw. L_{H}, T_{H}, D_{H}), einem Hauptschütz (HS), einer Ladeschaltung (LD, R_{L}) und einer Filterschaltung (L_{f}, C_{f}). Der Gleichspannungssteller soll die Zwischenkreisspannung von der Stromschienenspannung entkoppeln. Im folgenden werden Ausführungen mit Hochsetzsteller und Tiefsetzsteller beschrieben. Andere Ausführungen, mit anderen Gleichstromstellem sind denkbar, so z.B. mit einem Zweiquadrantensteller, der eine Energierückspeisung erlauben würde. Fig. 5 zeigt den Aufbau dieses Zweiges mit einem Tiefsetzsteller, Fig. 6 den Aufbau mit einem Hochsetzsteller.

Je nach Situation werden Stromabnehmer für ein Oberleitung oder für eine dritte Schiene eingesetzt. Auch hier besteht die Möglichkeit, pro Antriebseinheit eigene Stromabnehmer vorzusehen, oder einen oder mehrere Stromabnehmer für alle Antriebseinheiten gemeinsam einzusetzen.

Die Ladeschaltung dient, analog zum Wechselspannungszweig, zum Aufladen des Zwischenkreises aus dem Netz. Sie besteht aus einem Ladeschütz (LD) und einem La dewiderstand (R_{L}). Ein Hauptschütz (HS) dient zum Überbrücken der Ladeschaltung. Während des Betriebs ist es geschlossen, und die Ladeschaltung bleibt wirkungslos.

Zur Unterdrückung der vom Gleichstromsteller erzeugten Oberwellen kann eine Filterschaltung erforderlich sein. Diese Filterschaltung besteht aus einer Filterinduktivität (L_{f}) und einem Filterkondensator (C_{f}). Andere Filterschaltungen sind ebenfalls möglich.

Ist die Zwischenkreisspannung höher als die Stromschienenspannung, so kann als Gleichspannungssteller ein Hochsetzsteller eingesetzt werden. Der Hochsetzsteller besteht aus einer Induktivität (L_{H}), einem Schaltelement (Transistor, IGBT, GTO; T_{H}) und einer Diode (D_{H}). Zusammen mit der Zwischenkreiskapazität erzeugt dieser Steller aus der Stromschienenspannung eine höhere Zwischenkreisspannung. Er entnimmt dem Netz einen weitgehend konstanten Strom, dessen Höhe abhängig von der übertragenen Leistung ist. Es erscheint möglich, daß beim Einsatz des Hochsetzstellers auf eine Filterschaltung verzichtet werden kann, bzw. daß diese entsprechend kleiner ausfallen kann. Ein Hochsetzsteller erlaubt keine Energierückspeisung ins Netz, so daß auf jeden Fall ein Bremssteller im Zwischenkreis erforderlich ist, wenn eine elektrische Bremse gewünscht wird.

Falls die Zwischenkreisspannung niedriger als die Stromschienenspannung ist, kann als Gleichspannungssteller ein Tiefsetzsteller eingesetzt werden. Auch dieser besteht aus einer Induktivität (L_{T}), einem Schaltelement (T_{T}) und einer Diode (D_{T}). Zusammen mit der Zwischenkreiskapazität erzeugt er aus der Stromschienenspannung eine niedrigere Zwischenkreisspannung, was ihn für Netze mit sehr hohen Gleichspannungen geeignet macht. Er entnimmt dem Netz einen pulsierenden Strom, so daß eine Filterschaltung auf jeden Fall erforderlich ist. Auch ein Tiefsetzsteller erlaubt keine Energierückspeisung ins Netz, so daß ebenfalls ein Bremssteller im Zwischenkreis erforderlich ist, wenn eine elektrische Bremse gewünscht wird.

Es sind noch eine ganze Reihe andere Gleichstromsteller-Varianten denkbar mit unterschiedlichen Eigenschaften, wie Zweiquadrantensteller, Durchflußwandler und andere.

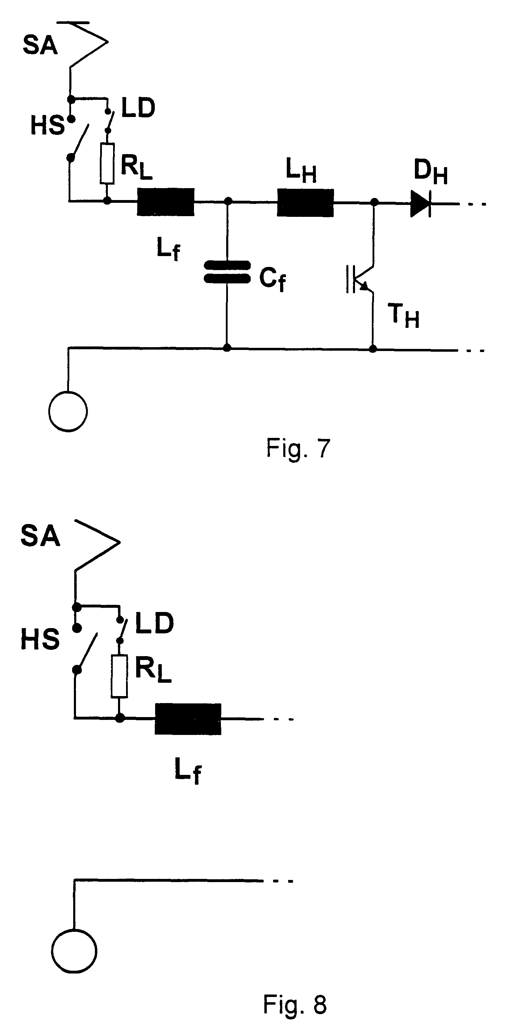

Fig. 7 zeigt den Aufbau eines Gleichspannungszweiges ohne Anpaßschaltung Anpaßschaltung. Ein solcher Zweig dient zur Speisung des Zwischenkreises direkt aus einem Gleichspannungsnetz (z.B. 750V=). Er besteht im Wesentlichen aus Stromabnehmer (SA), Hauptschalter (HS), einer Ladeschaltung (LD, R_{L}) und einer Filterschaltung (L_{f} + Zwischenkreiskondensator).

Für die Stromabnehmer (SA) gilt das zuvor gesagte: Abhängig von den Gegebenheiten werden Stromabnehmer für eine Oberleitung oder für eine dritte Schiene eingesetzt. Auch hier besteht die Möglichkeit, pro Antriebseinheit eigene Stromabnehmer vorzusehen, oder einen oder mehrere Stromabnehmer für alle Antriebseinheiten gemeinsam einzusetzen.

Die Ladeschaltung dient, analog zu den bisher beschriebenen Zweigen, zum Aufladen des Zwischenkreises aus dem Netz. Sie besteht wieder aus Ladeschütz (LD) und Ladewiderstand (R_{L}). Das Hauptschütz (HS) dient zum Überbrücken der Ladeschaltung. Während des Betriebs ist es geschlossen und die Ladeschaltung bleibt wirkungslos.

Zur Unterdrückung eventuell auftretender Oberwellen kann eine Filterschaltung erforderlich sein. Diese Filterschaltung besteht in diesem Zweig nur aus der Filterinduktivität (L_{f}). Die Zwischenkreiskapazität übernimmt die Funktion des Filterkondensators. Andere Filterschaltungen sind denkbar.

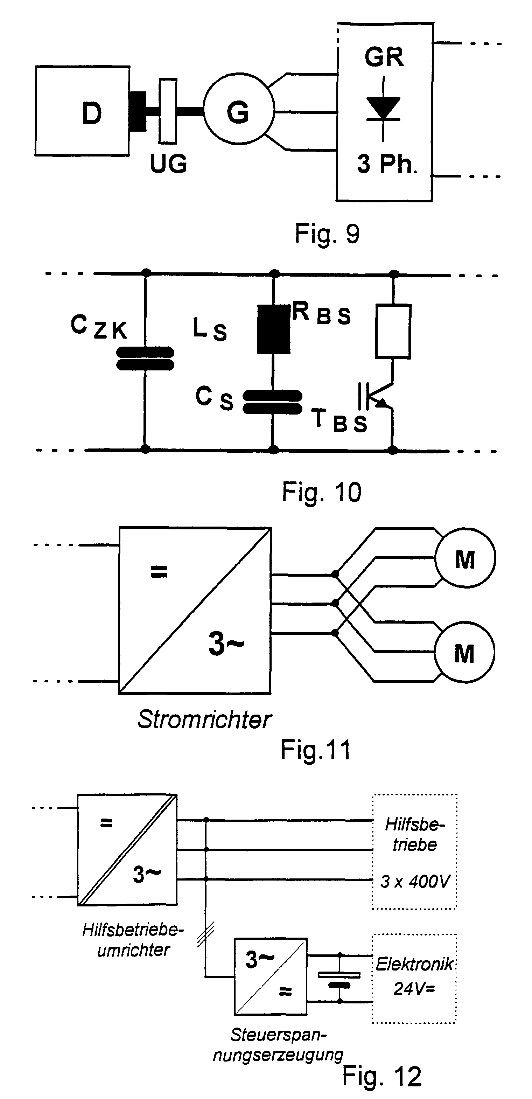

Der in Fig. 9 abgebildete Generatorzweig dient zur Speisung des Zwischenkreises aus einem Generator, der von einem Verbrennungsmotor, vorzugsweise Dieselmotor, angetrieben ist. Er besteht aus dem antreibenden Verbrennungsmotor (D), ggf. einem Umlenkgetriebe (UG), einem Drehstromgenerator (G) und einem dreiphasigen Gleichrichter (GR). Als Verbrennungsmotor kann z.B. ein Dieselmotor eingesetzt werden.

Der Verbrennungsmotor (D) erzeugt die zum Fahren erforderliche Energie. Er kann ständig im optimalen Punkt betrieben werden, da Fahrgeschwindigkeit und die Drehzahl des Verbrennungsmotors entkoppelt sind. Vorzugsweise wird man hier einen Dieselmotor einsetzen.

Unter Umständen ist aus Gründen der Einbausituation ein Umlenkgetriebe (UG) erforderlich. Es kann gleichzeitig genutzt werden, um unterschiedliche optimale Drehzahlen von Verbrennungsmotor und Generator aneinander anzupassen.

Als Generator (G) wird ein Drehstromgenerator eingesetzt. Er wandelt die vom Verbrennungsmotor erzeugte rotatorische Energie in elektrische Energie um. Die erzeugte Spannung muß hoch genug sein, um die gewünschte Zwischenkreisspannung durch einfache Gleichrichtung erreichen zu können, und auch unter Last im zulässigen Bereich halten zu können.

Als Gleichrichter (GR) wird ein einfacher, dreiphasiger, ungesteuerter Halbleiter-Brükkengleichrichter eingesetzt.

Der in Fig. 10 dargestellte Zwischenkreis mit Bremssteller hat die Aufgabe, die von den Gleichrichtern, Gleichspannungsstellern oder Vierquadrantenstellem der Einspeisezweige gelieferten Ströme zu glätten und eine konstante Zwischenkreisspannung zur Verfügung zu stellen. Er besteht aus einem Zwischenkreiskondensator (C_{ZK}), evtl. einem Stützschwingkreis (Lₛ, Cₛ) und ggf. einem Bremssteller, bestehend aus Bremswiderstand (R_{BS}) und Schaltelement (Transistor, IGBT, GTO; T_{BS}). dar. Nicht dargestellt ist ein, bei Wegfall des Bremsstellers erforderlicher, Entladewiderstand, der ein definierte Entladen des Zwischenkreises erlaubt.

Als Zwischenkreiskondensator (C_{ZK}) wird eine Kondensatorbattene entsprechender Große und Spannungsfestigkeit eingesetzt.

Bei einer vorhandenen Wechselspannungseinspeisung kann zur zusätzlichen Stützung der Zwischenkreisspannung ein, auf die Frequenz der speisenden Ströme abgestimmter Stützschwingkeis eingesetzt werden. Dieser Stützschwingkreis besteht aus einer Reihenschaltung einer Induktivität (Lₛ) und einer Kapazität (Cₛ).

Der Bremssteller besteht aus einem, über ein Schaltelement (Transistor, IGBT oder GTO; T_{BS}) zuschaltbaren Widerstand (R_{BS}). Er hat die Aufgabe, die beim elektrischen Bremsen aufgenommene Bremsenergie zu verbrauchen, falls eine Rückspeisung ins Netz nicht möglich ist.

Ein Bremssteller ist unter anderem dann erforderlich, falls eine elektrische Bremse gewünscht wird und gleichzeitig ein Generatorzweig oder ein Gleichspannungszweig mit nicht rückspeisefähiger Anpaßschaltung (Tiefsetz-, Hochsetz-, Hochtiefsetzsteller) eingesetzt wird oder falls bei gewünschter elektrischer Bremse mit nicht aufnahmefähigen Netzen im elektrischen Betrieb zu rechnen ist. Generell sollte einer evtl. möglichen Rückspeisung der Vorzug vor dem Einsatz eines Bremsstellers gegeben werden.

Falls auf einen Bremssteller verzichtet wird, so ist ein, über Schütz oder Halbleiterschalter zuschaltbarer Entladewiderstand (nicht dargestellt) erforderlich, um den Zwischenkreis bei abgestellten Fahrzeug entladen zu können. Dieser Entladewiderstand kann wesentlich schwächer dimensioniert werden, als der Bremswiderstand, da er nur sehr geringe Energiemengen umsetzen muß.

Die Hilfsbetriebeversorgung dient der Bereitstellung von Spannungen zur Speisung der Hilfsbetriebe (z.B. 3 x 400V) und Versorgung der elektronischen Ausrüstung (z.B. 24V) Sie besteht im Wesentlichen aus einem oder mehreren Umrichtern, die aus dem Zwischenkreis gespeist werden und die entsprechenden Spannungen geneneren.

Diese Umrichter haben im Prinzip den gleichen Aufbau, wie die Traktionswechselrichter für Drehstrommotoren in der Fahrmotorspeisung. Häufig werden aus den, von den Hilfsbetriebeumrichtern erzeugten Spannungen weitere Spannungen, beispielsweise Steuerspannungen zur Speisung der Fahrzeugelektronik, generiert.
Ein oft verwendetes System zur Hilfsbetriebeversorgung ist Fig. 10 dargestellt. Das dort dargestellte System besteht aus Hilfsbetriebeumrichter mit nachgeschalteter Steuerspannungserzeugung. Das gesamte System wird normalerweise als komplette Einheit bezogen und verwendet. Abwandlungen sind nach Bedarf möglich.

Der Hilfsbetriebeumrichter ist hier ein dreiphasiger Wechselrichter. Er erzeugt aus der Zwischenkreisspannung, die für die Hilfsbetriebe erforderliche Spannung (z.B. 3 x 400V Drehstrom).

Die Steuerspannungserzeugung erzeugt aus der Hilfsbetriebespannung die Steuerspannung zur Speisung der Fahrzeugelektronik. Als Steuerspannungserzeugung kann z.B. ein Transformator mit nachgeschalteten Gleichrichter verwendet werden. Die Steuerspannung ist häufig über eine Batterie gepuffert.

Die Fahrmotorspeisung dient zur Erzeugung des für die Fahrmotoren erforderlichen Spannungssystems aus der Zwischenkreisspannung. Sie besteht aus einem oder mehreren Stromrichtern (SR), die jeweils einen oder mehrere Fahrmotoren (M) speisen. Fig. 10 zeigt als Beispiel einen Zweig der Fahrmotorspeisung, mit einem dreiphasigen Wechselrichter zur Speisung zweier Drehstrom-Fahrmotoren. Ein solcher Zweig kann auch mehrfach vorhanden sein. Eine ebenfalls mögliche Verwendung von Gleichstrommotoren über einen Gleichspannungssteller ist hier nicht näher dargestellt.

Die Stromrichter (SR) erzeugen aus der Zwischenkreisspannung das zum Fahren erforderliche Drehfeld für die an ihnen angeschlossenen Motoren (M). Je nacn erforderlicher Leistung können IGBT-, Transistor oder GTO-Stromrichter eingesetzt werden. Als Beispiel für eine mögliche Ausführung eines Stromrichters sei auf den Aufsatz "Antriebsstromrichter mit Transistoren für Niederflur-Stadtbahnwagen" in der Zeitschrift "Der Nahverkehr", Ausgabe 4/1991, Alba Fachverlag Düsseldorf, verwiesen.

Als Fahrmotoren (M) werden übliche, im Bahnverkehr eingesetzte Asynchronmaschinen verwendet.

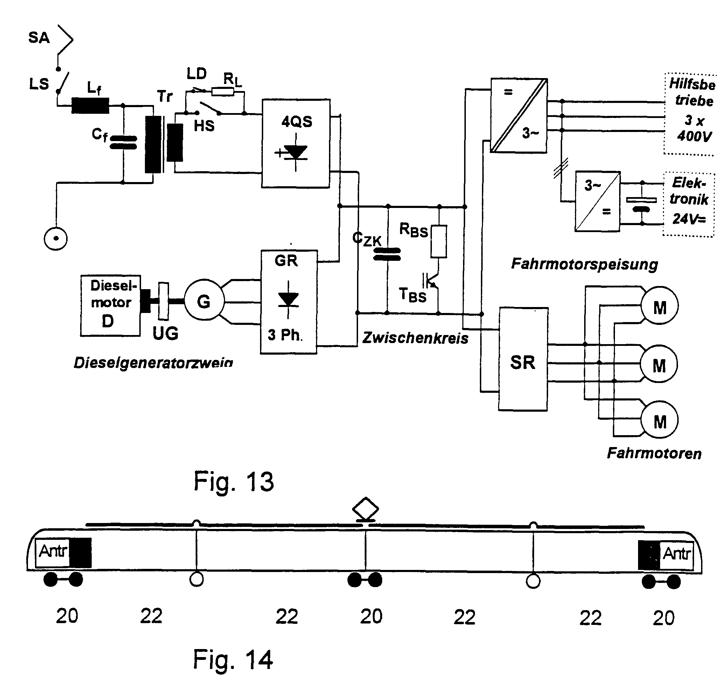

Als Beispiel für eine mögliche Ausführung eines Duofahrzeugs mit einem kombinierten Antrieb für elektrischeim Wechselspannungsbetrieb und dieselelektrischen Betrieb, wird ein vierteiliges Fahrzeug mit zwei Antriebseinheiten und sechs angetriebenen Achsen betrachtet. Das Beispielfahrzeug ist als Duo-Fahrzeug für Wechselspannungsbetrieb am Oberleitungsnetz und für netzunabhängigen dieselelektrischen Betrieb ausgelegt. Fig. 13 zeigt eine Antriebseinheit für ein solches Fahrzeug, das seinerseits in Fig. 14 schematisch in Seitenansicht gezeigt ist. Die dargestellte Antriebseinheit ist also zweimal im Fahrzeug vorhanden.

Das Umschalten zwischen den Betriebsarten erfolgt durch Abrüsten aus der einen Betriebsart, und anschließendes Wiederaufrüsten in der neuen Betriebsart. Dabei muß der Zwischenkreis zwischendurch nicht entladen werden, was den Umschaltvorgang beschleunigt. Voraussetzung ist nur, daß das Fahrzeug für die beide Betriebsarten ausgerüstet ist, und daß während des Umschaltvorgangs die Voraussetzungen für beide Betriebsarten vorliegen. Der Umschaltvorgang kann bei stehendem Fahrzeug, und bei entsprechender Koordination auch im fahrenden Fahrzeug erfolgen. Allerdings muß auf jeden Fall der Antrieb und die Hilfsbetriebeversorgung während des Umschaltvorgangs abgeschaltet werden, so daß das Fahrzeug ggf. während des Umschaltvorgangs rollt.

Weitere Einzelheiten des erfindungsgemäßen Triebfahrzeugs sind in den Unteransprüchen dargelegt. Sie betreffen insbesondere den vorteilhaften Einsatz der Antriebseinheit 28 und deren mögliche unterschiedliche Ausgestaltungen.

## Patentansprüche

1. Schienengebundenes Triebfahrzeug (10) für die Personenbeförderung mit einem von wenigstens einem Wagenkasten (22) gebildeten Wagenteil mit einem Fahrgastraum zur Aufnahme von Fahrgästen und mit einem Führerstand an wenigstens einer Stirnseite, mit einem gegenüber den Endteilen des Wagenkastens (22) abgesenkten Mittelteil (12) und mit wenigstens einem gegenüber dem Mittelteil erhöhten als Triebwagenkopf (14, 15) ausgebildeten Endteil sowie mit aus Radsätzen gebildeten Fahrwerken (20) und mit wenigstens einer Antriebseinheit (28), wobei diese von einem Antrieb (30) gemeinsam mit einem Getriebe (32) gebildet ist, wobei der Antrieb wenigstens eine Achse des Fahrwerks beaufschlagt,
**dadurch gekennzeichnet, daß**
in an sich bekannter Weise beide Enden des Schienentriebfahrzeugs jeweils als Triebwagenkopf (14, 15) ausgebildet sind, daß der wahlweise dieselmechanische Antrieb (30) oder dieselelektrische Antrieb oder ein rein elektrische Antrieb oder ein aus einem dieselelektrischen mit einem rein elektrischen Antrieb kombinierte Mehrsystemantrieb oder ein aus zwei verschiedenen elektrischen Antriebsvarianten kombinierte Mehrsystemantrieb oder ein aus einem dieselektrischen und zwei verschiedenen elektrischen Antriebsvarianten kombinierte Mehrsystemantrieb und das Getriebe (32) jeweils parallel nebeneinander unter jedem Triebwagenkopf (14, 15) des Wagenkastens (22) zwischen dem stirnseitigen Ende des Triebwagenkopfes (14, 15) und dem zugeordneten Fahrwerk (20) angeordnet sind.

2. Schienengebundenes Triebfahrzeug nach Anspruch 1, **dadurch gekennzeichnet, daß** der dieselmechanische Antrieb (30) von einem Dieselmotor mit Kühlkreislauf gebildet ist, der mit einem Getriebe (32) zusammenarbeitet und jeweils unter dem Triebwagenkopf (14, 15) des Wagenkastens (22) angeordnet ist.

3. Schienengebundenes Triebfahrzeug nach Anspruch 2, **dadurch gekennzeichnet, daß** der Dieselmotor über Stimräder mit dem Getriebe (32) gekoppelt ist und über eine Gelenkwelle (34)mit dem zugeordneten Fahrwerk (20) zusammenarbeitet.

4. Schienengebundenes Triebfahrzeug nach Anspruch 2 oder 3, **dadurch gekennzeichnet, daß** der Dieselmotor (30) und das Getriebe (32) parallel nebeneinander angeordnet sind.

5. Schienengebundenes Triebfahrzeug nach einem der vorherigen Ansprüche, **dadurch gekennzeichnet, daß** der dieselmechanische Antrieb (30) mit einem automatischen Mehrganggetriebe versehen ist, das über eine drehelastische Kupplung mit dem Dieselmotor (30) zusammenarbeitet.

6. Schienengebundenes Triebfahrzeug nach einem der vorherigen Ansprüche, **dadurch gekennzeichnet, daß** das Getriebe (32) als Planetengetriebe ausgebildet ist.

7. Schienengebundenes Triebfahrzeug nach einem der vorherigen Ansprüche, **dadurch gekennzeichnet, daß** das Getriebe (32) einen Anfahrwandler aufweist.

8. Schienengebundenes Triebfahrzeug Anspruch 7, **dadurch gekennzeichnet, daß** der Anfahrwandler als hydrodynamischer Wandler ausgebildet ist.

9. Schienengebundenes Triebfahrzeug nach Anspruch 7 oder 8, **dadurch gekennzeichnet, daß** der Anfahrwandler im stationären Betrieb überbrückbar ist.

10. Schienengebundenes Triebfahrzeug einem der vorherigen Ansprüche, **dadurch gekennzeichnet, daß** zwischen dem Anfahrwandler und dem Getriebe ein hydrodynamischer Retarder angeordnet ist, der in allen Gängen die auftretende Bremsleistung unterbrechungsfrei abführt.

11. Schienengebundenes Triebfahrzeug nach einem der vorherigen Ansprüche, **dadurch gekennzeichnet, daß** zur Abfuhr der Verlustwärme des Getriebes und des Retarders ein Wärmetauscher vorgesehen ist, der mit dem Kühlkreislauf des Dieselmotors zusammenarbeitet.

12. Schienengebundenes Triebfahrzeug nach einem der Ansprüche 2 oder 11, **dadurch gekennzeichnet, daß** der Kühlkreislauf mit einer Kühlanlage versehen ist, welche einen hydrostatisch/hydraulisch angetriebenen Lüfter aufweist, der Kühlluft quer zur Fahrtrichtung durch die Antriebseinheit saugt.

13. Schienengebundenes Triebfahrzeug nach einem der vorherigen Ansprüche, **dadurch gekennzeichnet, daß** eine Schaltautomatik vorgesehen ist, die zur Steuerung der Funktionen des Dieselmotors und des Getriebes dient.

14. Schienengebundenes Triebfahrzeug nach Anspruch 13, **dadurch gekennzeichnet, daß** die Schaltautomatik diagnosefähig ist.

15. Schienengebundenes Triebfahrzeug nach einem der vorherigen Ansprüche, **dadurch gekennzeichnet, daß** die wenigstens eine Antriebseinheit mittels der Schaltautomatik fembedienbar ist, zum Beispiel von einem Führerstand aus.

16. Schienengebundenes Triebfahrzeug nach einem der vorherigen Ansprüche, **dadurch gekennzeichnet, daß** ein Verlustwärmetauscher vorgesehen ist, welcher die aus dem Fahr- und Bremsbetrieb anfallende Verlustwärme aufnimmt und zur Wagenheizung verwendet.

17. Schienengebundenes Triebfahrzeug nach Anspruch 16, **dadurch gekennzeichnet, daß** der Verlustwärmetauscher parallel zum Kühlkreislauf geschaltet ist.

18. Schienengebundenes Triebfahrzeug nach einem der vorherigen Ansprüche, **dadurch gekennzeichnet, daß** zusätzlich eine beheizbare Warmwasseranlage vorgesehen ist, welche zur Vorwärmung des Dieselmotors dient.

19. Schienengebundenes Triebfahrzeug nach einem der vorherigen Ansprüche mit einem Doppelachsantrieb, **dadurch gekennzeichnet, daß** einer mit dem Antrieb verbundenen ersten Antriebsachse eine zweite Antriebsachse benachbart ist, die ein Achswendegetriebe aufweist, welches über eine Gelenkwelle mit dem Getriebe des Antriebs in Wirkverbindung steht.

20. Schienengebundenes Triebfahrzeug nach einem der vorherigen Ansprüche, **dadurch gekennzeichnet, daß** die Laufwerke als Drehgestelle ausgebildet sind und daß deren angetriebene Achsen über eine Gelenkwelle mit der ortsfest angeordneten Antriebseinheit in Verbindung stehen.

21. Schienengebundenes Triebfahrzeug nach einem der vorherigen Ansprüche, **dadurch gekennzeichnet, daß** als Antriebseinheit (28) ein dieselelektrischer Antrieb vorgesehen ist mit einem Dieselmotor, der einen Generator antreibt, welcher Generator über einen Stromrichter (SR) wenigstens einen elektrischen Fahrmotor (M) speist, der seinerseits wenigstens ein (20) Fahrwerk beaufschlagt.

22. Schienengebundenes Triebfahrzeug nach Anspruch 1, **dadurch gekennzeichnet, daß** als Antriebseinheit (28) eine Wechselstromeinspeisung mit wenigstens einem Stromabnehmer (SA), einem Transformator (TR), einem Stromrichter (SR) und wenigstens einem Fahrmotor (M) vorgesehen ist, welcher Fahrmotor (M) wenigstens ein Fahrwerk (20) beaufschlagt.

23. Schienengebundenes Triebfahrzeug nach Anspruch 1, **dadurch gekennzeichnet, daß** als Antriebseinheit (28) eine Gleichstromeinspeisung mit wenigstens einem Stromabnehmer (SA), einem Stromrichter (SR) und wenigstens einem Fahrmotor (M) vorgesehen ist, welcher Fahrmotor (M) wenigstens ein Fahrwerk (20) beaufschlagt.

24. Schienengebundenes Triebfahrzeug nach Anspruch 1, **dadurch gekennzeichnet, daß** als Antriebseinheit (28) eine Kombination der in den Ansprüchen 21, 22 und 23 beschriebenen Antriebseinheiten unter gemeinsamer Verwendung der Stromrichter (SR) und Fahrmotoren (M) vorgesehen ist.

25. Schienengebundenes Triebfahrzeug nach einem der vorherigen Ansprüche, **dadurch gekennzeichnet, daß** das Schienentriebfahrzeug (10) wenigstens zwei Wagenkästen (22) aufweist, die gelenkig miteinander verbunden sind.

26. Schienengebundenes Triebfahrzeug nach Anspruch 19, **dadurch gekennzeichnet, daß** jeder Wagenkasten (22) sich an dem dem benachbarten Wagenkasten (22) zugewandten Ende jeweils auf einem Laufwerk abstützt.

27. Schienengebundenes Triebfahrzeug nach einem der vorherigen Ansprüche, **dadurch gekennzeichnet, daß** beide Enden des Schienentriebfahrzeugs als Triebwagenkopf (14, 15) ausgebildet sind und so einen Einsatz im Wendezugbetrieb ermöglichen.

## Claims

1. A track-bound power car (10) for passenger conveyance, with a wagon part constituted by at least one wagon body (22) with a passenger compartment to hold passengers and with a driver's cab at one end at least, with a middle part (12) which is lowered in relation to the end parts of the wagon body (22) and with an end part constructed as a power car end (14, 15) which is elevated in relation to the middle part, and with running gear (20) consisting of wheel sets and with at least one drive unit (28), this being constituted by a drive (30) jointly with a gear mechanism (32), the drive acting on at least one axle of the running gear, **characterised in that** in *per se* known manner both ends of the track-bound vehicle are respectively constructed as a power car end (14, 15) and **in that** the optionally diesel mechanical drive (30) or diesel electric drive or a purely electric drive or a multi-system drive combined with a purely electric drive or a multi-system drive combined from two different electric drive versions or a multi-system drive combined from a diesel electric and two different electric drive versions and the gear mechanism (32) are respectively disposed parallel beside one another under each power car end (14, 15) of the wagon body (22) between the front end of the power wagon end (14, 15) and the associated running gear (20).

2. A track-bound power car according to claim 1, **characterised in that** the diesel mechanical drive (30) consists of a diesel engine with a cooling circuit which co-operates with a gear mechanism (32) and is respectively disposed under the power car end (14, 15) of the wagon body (22).

3. A track-bound power car according to claim 2, **characterised in that** the diesel engine is coupled to the gear mechanism (32) via spur gears and co-operates with the associated running gear (20) via an articulated shaft (34).

4. A track-bound power car according to claim 2 or 3, **characterised in that** the diesel engine (30) and the gear mechanism (32) are disposed in parallel beside each other.

5. A track-bound power car according to one of the preceding claims, **characterised in that** the diesel mechanical drive (30) is provided with an automatic multispeed gear mechanism which co-operates with the diesel engine (30) via a torsionally flexible coupling.

6. A track-bound power car according to one of the preceding claims, **characterised in that** the gear mechanism (32) is constructed as a planetary gearing.

7. A track-bound power car according to one of the preceding claims, **characterised in that** the gear mechanism (32) comprises a starting converter.

8. A track-bound power car according to claim 7, **characterised in that** the starting converter is constructed as a hydrodynamic converter.

9. A track-bound power car according to claim 7 or 8, **characterised in that** the starting converter can be bridged in stationary operation.

10. A rack-bound power car according to one of the preceding claims, **characterised in that** between the starting converter and the gear mechanism there is a hydrodynamic retarder which, in all gears and without interruption, delivers the brake power arising.

11. A track-bound power car according to one of the preceding claims, **characterised in that** to dissipate the lost heat from the gearbox and the retarder, a heat exchanger is provided which co-operates with the cooling circuit of the diesel engine.

12. A track-bound power car according to one of claims 2 or 11, **characterised in that** the cooling circuit is provided with a cooling system comprising a hydro-statically/hydraulically driven fan which sucks in cooling air through the drive unit crosswise to the direction of travel.

13. A track-bound power car according to one of the preceding claims, **characterised in that** an automatic switching means is provided which serves to control the functions of the diesel engine and of the gear mechanism.

14. A track-bound power car according to claim 13, **characterised in that** the automatic switching means is diagnosis-capable.

15. A track-bound power car according to one of the preceding claims, **characterised in that** the at least one drive unit can be remotely controlled, for example from a driver's cab, by means of the automatic switching means.

16. A track-bound power car according to one of the preceding claims, **characterised in that** a lost heat exchanger is provided which receives the lost heat arising from the running and braking operations and uses it for wagon heating.

17. A track-bound power car according to claim 16, **characterised in that** the lost heat exchanger is connected in parallel with the cooling circuit.

18. A track-bound power car according to one of the preceding claims, **characterised in that** in addition a heatable hot water system is provided which serves to preheat the diesel engine.

19. A track-bound power car according to one of the preceding claims with a double axle drive, **characterised in that** a first driving axle connected to the drive is adjacent to a second driving axle which comprises an axle reversing gear mechanism which is operatively connected to the gear mechanism of the drive via an articulated shaft.

20. A track-bound power car according to one of the preceding claims, **characterised in that** the running gear units are constructed as bogies and **in that** their driven axles are connected to the rigidly disposed drive unit via an articulated shaft.

21. A track-bound power car according to one of the preceding claims, **characterised in that** the drive u nit (28) provided is a diesel electric drive with a diesel engine which drives a generator, which generator, via a power converter (SR) feeds at least one electric traction motor (M) which in turn acts on at least one (20) set of running gear.

22. A track-bound power car according to claim 1, **characterised in that** the drive unit (28) provided is an alternating current feeder with at least one power pick-up (SA), one transformer (TR), one power converter (SR) and at least one traction motor (M), which traction motor (M) acts on at least one set of running gear (20).

23. A track-bound power car according to claim 1, **characterised in that** the drive u nit (28) provided is a direct current feeder with at least one current pick-up (SA), one current converter (SR) and at least one traction motor (M), which traction motor (M) acts on at least one set of running gear (20).

24. A track-bound power car according to claim 1, **characterised in that** the drive unit (28) provided is a combination of the drive units described in claims 21, 22 and 23, with joint use of the power converter (SR) and running motors (M).

25. A track-bound power car according to one of the preceding claims, **characterised in that** the track-bound power car (10) has at least two wagon bodies (22) which are articulatingly connected to each other.

26. A track-bound power car according to claim 19, **characterised in that** each wagon body (22) is at the end towards the adjacent wagon body (22) braced on a set of running gear.

27. A track-bound power car according to one of the preceding claims, **characterised in that** both ends of the track-bound power car are constructed as a power car head (14, 15) and so allow their use in push-pull operations.

## Revendications

1. Véhicule moteur roulant sur rails (10) pour le transport de personnes, comprenant une partie de voiture formée par au moins une superstructure (22) comprenant un compartiment voyageurs destiné à l'accueil des usagers et un poste de conduite à au moins un côté frontal, une partie médiane (12) abaissée par rapport aux parties terminales de la superstructure (22) et au moins une partie terminale est réalisée sous la forme d'une automotrice (14, 15) surélevée par rapport à la partie médiane, ainsi que des mécanismes de roulement (20) formé par des paires de roues et au moins une unité de commande (28), dans lequel cette dernière est formée par une commande (30) de manière conjointe avec une transmission (32), la transmission agissant au moins sur un essieu du mécanisme de roulement, **caractérisé en ce que** les deux extrémités du véhicule moteur roulant sur rails sont réalisées, d'une manière connue en soi, respectivement sous la forme d'une tête automotrice (14, 15), de telle sorte que la commande (30) du type à diesel mécanique ou la commande du type à diesel électrique ou une commande purement électrique ou une commande combinée de type multicourant constituée d'une commande du type à diesel électrique avec une commande purement électrique ou encore une commande combinée de type multicourant constituée par deux variantes de commandes électriques différentes ou une commande combinée de type multicourant constituée par une commande du type à diesel électrique et par deux variantes de commandes électriques différentes, au choix, et la transmission (32) sont disposées respectivement en position parallèle l'une à côté de l'autre en dessous de chaque tête automotrice (14, 15) de la superstructure (22) entre l'extrémité frontale de la tête automotrice (14, 15) et le mécanisme de roulement correspondant (20).

2. Véhicule moteur roulant sur rails selon la revendication 1, **caractérisé en ce que** la commande (30) du type diesel mécanique est formée par un moteur diesel comprenant un circuit de refroidissement qui coopère avec une transmission (32) et qui est disposé respectivement en dessous de la tête automotrice (14, 15) de la superstructure (22).

3. Véhicule moteur roulant sur rails selon la revendication 2, **caractérisé en ce que** le moteur diesel est couplé à la transmission (32) via des roues cylindriques et coopère, via un arbre articulé (34), avec le mécanisme de roulement correspondant (20).

4. Véhicule moteur roulant sur rails selon la revendication 2 ou 3, **caractérisé en ce que** le moteur diesel (30) et la transmission (32) sont disposés en position parallèle l'un à côté de l'autre.

5. Véhicule moteur roulant sur rails selon l'une quelconque des revendications précédentes, **caractérisé en ce que** la commande (30) de type diesel mécanique est munie d'une transmission automatique à plusieurs vitesses qui coopère, via un embrayage élastique à torsion, avec le moteur diesel (30).

6. Véhicule moteur roulant sur rails selon l'une quelconque des revendications précédentes, **caractérisé en ce que** la transmission (32) est réalisée sous la forme d'un engrenage planétaire.

7. Véhicule moteur roulant sur rails selon l'une quelconque des revendications précédentes, **caractérisé en ce que** la transmission (32) est réalisée sous la forme d'un convertisseur de démarrage.

8. Véhicule moteur roulant sur rails selon la revendication 7, **caractérisé en ce que** le convertisseur de démarrage est réalisé sous la forme d'un convertisseur hydrodynamique.

9. Véhicule moteur roulant sur rails selon la revendication 7 ou 8, **caractérisé en ce que** le convertisseur de démarrage peut être ponté en régime stationnaire.

10. Véhicule moteur roulant sur rails selon l'une quelconque des revendications précédentes, **caractérisé en ce qu'**un ralentisseur hydrodynamique est monté entre le convertisseur de démarrage et la transmission, qui évacue sans interruption la puissance au frein que l'on obtient à toutes les vitesses.

11. Véhicule moteur roulant sur rails selon l'une quelconque des revendications précédentes, **caractérisé en ce que**, pour la dissipation de la chaleur perdue de la transmission et du ralentisseur, on prévoit un échangeur de chaleur qui coopère avec le circuit de refroidissement du moteur diesel.

12. Véhicule moteur roulant sur rails selon l'une quelconque des revendications 2 à 11, **caractérisé en ce que** le circuit de refroidissement est équipé d'une installation de réfrigération qui présente un ventilateur à entraînement hydrostatique/hydraulique qui aspire l'air de refroidissement en direction transversale à la direction de roulement, à travers l'unité de commande.

13. Véhicule moteur roulant sur rails selon l'une quelconque des revendications précédentes, **caractérisé en ce qu'**on prévoit une transmission automatique qui sert à la mise en oeuvre des fonctions du moteur diesel et de la transmission.

14. Véhicule moteur roulant sur rails selon la revendication 13, **caractérisé en ce que** la transmission automatique est à même d'établir un diagnostic.

15. Véhicule moteur roulant sur rails selon l'une quelconque des revendications précédentes, **caractérisé en ce que** l'unité ou les unités de commande peut ou peuvent être actionnées à distance à l'aide de la transmission automatique, par exemple à partir d'un poste de conduite.

16. Véhicule moteur roulant sur rails selon l'une quelconque des revendications précédentes, **caractérisé en ce qu'**on prévoit un échangeur de chaleur perdue qui prélève la chaleur perdue que l'on obtient lors de la circulation et lors du freinage et qui l'utilise pour le chauffage de la voiture.

17. Véhicule moteur roulant sur rails selon la revendication 16, **caractérisé en ce que** l'échangeur de chaleur perdue est monté en parallèle au circuit de refroidissement.

18. Véhicule moteur roulant sur rails selon l'une quelconque des revendications précédentes, **caractérisé en ce qu'**on prévoit en outre une installation d'eau chaude apte à être chauffée qui sert au réchauffement préalable du moteur diesel.

19. Véhicule moteur roulant sur rails selon l'une quelconque des revendications précédentes comprenant une commande du type à essieu tandem, **caractérisé en ce qu'**un deuxième arbre de commande est disposé en position adjacente à un premier arbre de commande relié à la commande, le deuxième arbre présentant une transmission de changement d'essieu qui est disposée en liaison d'entraînement, via un arbre articulé, avec la transmission de la commande.

20. Véhicule moteur roulant sur rails selon l'une quelconque des revendications précédentes, **caractérisé en ce que** les mécanismes de roulement sont réalisés en forme de bogies et **en ce que** leurs essieux commandés sont reliés via un arbre articulé à l'unité de commande disposée à demeure.

21. Véhicule moteur roulant sur rails selon l'une quelconque des revendications précédentes, **caractérisé en ce qu'**on prévoit, à titre d'unité de commande (28), une commande de type diesel électrique comprenant un moteur diesel qui actionne une génératrice, ladite génératrice alimentant, via un redresseur de courant (SR) au moins un moteur de traction électrique (M) qui actionne pour sa part au moins un mécanisme de roulement (20).

22. Véhicule moteur roulant sur rails selon la revendication 1, **caractérisé en ce qu'**on prévoit, à titre d'unité de commande (28), une alimentation en courant alternatif comprenant au moins une prise de courant (SA), un transformateur (TR), un redresseur de courant (SR) et au moins un moteur de traction (M), ledit moteur de traction (M) actionnant au moins un mécanisme de roulement (20).

23. Véhicule moteur roulant sur rails selon la revendication 1, **caractérisé en ce qu'**on prévoit, à titre d'unité de commande (28), une alimentation en courant continu comprenant au moins une prise de courant (SA), un redresseur de courant (SR) et au moins un moteur de traction (M), ledit moteur de traction (M) actionnant au moins un mécanisme de roulement (20).

24. Véhicule moteur roulant sur rails selon la revendication 1, **caractérisé en ce qu'**on prévoit, à titre d'unité de commande (28), une combinaison des unités de commande décrites aux revendications 21, 22 et 23, avec une utilisation commune des redresseurs de courant (SR) et des moteurs de traction (M) .

25. Véhicule moteur roulant sur rails selon l'une quelconque des revendications précédentes, **caractérisé en ce que** le véhicule moteur roulant sur rails (10) présente au moins deux superstructures (22) qui sont reliées en articulation l'une à l'autre.

26. Véhicule moteur roulant sur rails selon la revendication 19, **caractérisé en ce que** chaque superstructure (22) s'appuie, à l'extrémité tournée vers la superstructure voisine (22), respectivement sur un mécanisme de roulement.

27. Véhicule moteur roulant sur rails selon l'une quelconque des revendications précédentes, **caractérisé en ce que** les deux extrémités du véhicule moteur roulant sur rails sont réalisées sous la forme d'une tête automotrice (14, 15) et permettent de cette manière une mise en oeuvre dans une marche en réversible.
